# FASCICULE DE BREVET EUROPEEN

(11) **EP 3 350 660 B1**
(45) Date de publication et mention de la délivrance du brevet: **27.01.2021**
(21) Numéro de dépôt: 16785185.6
(22) Date de dépôt: 15.09.2016
(51) Int. Cl.: G05B 23/02

(54) **SYSTÈME ET PROCÉDÉ D'AIDE À LA DECISION POUR LA MAINTENANCE D'UNE MACHINE AVEC APPRENTISSAGE D'UN MODÈLE DE DÉCISION SUPERVISÉ PAR AVIS D'EXPERTS**
ENTSCHEIDUNGSHILFESYSTEM UND VERFAHREN ZUR INSTANDHALTUNG EINER MASCHINE MIT LERNEN EINES ENTSCHEIDUNGSMODELLS UNTER DER AUFSICHT VON EXPERTENMEINUNGEN
DECISION AID SYSTEM AND METHOD FOR THE MAINTENANCE OF A MACHINE WITH LEARNING OF A DECISION MODEL SUPERVISED BY EXPERT OPINION

(30) Priorité: 18.09.2015 FR 1558811
(43) Date de publication de la demande: 25.07.2018
(73) Titulaire: Safran Aircraft Engines, 75015 Paris (FR)
(72) Inventeur: RABENORO, Tsirizo, 77550 Moissy-Cramayel (FR); LACAILLE, Jérôme, Henri, Noël, 77550 Moissy-Cramayel (FR)
(74) Mandataire: Brevalex
(86) Numéro de dépôt international: PCT/FR2016/052333
(87) Numéro de publication internationale: WO 2017/046530

(56) Documents cités:
- EP-A1- 2 634 660
- US-A- 5 132 920
- US-A1- 2012 151 290
- US-B2- 7 587 296

## Description

### DOMAINE TECHNIQUE

Le domaine de l'invention est celui des systèmes de surveillance de l'état de santé d'une machine, telle qu'un moteur, notamment un moteur d'aéronef. L'invention concerne plus particulièrement un système automatisé d'aide à la décision pour la réalisation d'opérations de maintenance d'une machine.

### ÉTAT DE LA TECHNIQUE ANTÉRIEURE

La surveillance de l'état de santé d'une machine vise à en améliorer la sécurité et la fiabilité. Le document US2012/121290 A1 divulgue la fusion de modèles d'anomalies qui ont pour origine différentes sources de données pour identifier des symptômes et des modes de défaillances d'une machine. Pour ce qui concerne les moteurs d'aéronefs en particulier, cette surveillance vise à éviter ou à limiter l'arrêt en vol (« in-flight shutdown », IFSD), à réduire les retards ou annulation des vols (« delays and cancellations », D&C), et plus particulièrement, à faciliter la maintenance du moteur en anticipant les défaillances et en identifiant les composants fautifs ou défaillants.

Afin de surveiller l'état de santé d'un moteur d'aéronef, différents dispositifs de surveillance ou de détection d'anomalie sont utilisés pour vérifier le bon fonctionnement des différents composants du moteur. On retrouve par exemple, un dispositif de surveillance pour analyser le comportement de processus d'allumage, un autre pour analyser la température des gaz, un autre encore pour détecter le colmatage des filtres, et un autre pour analyser la consommation d'huile et de carburant, etc.

Les données générées par ces dispositifs de détection et de surveillance sont exploitées par des services de maintenance au sol au moyen d'algorithmes de suivi de l'état de santé (« health monitoring »). Ces algorithmes lèvent des alertes lorsqu'ils détectent une anomalie. Ces alertes sont ensuite exploitées par les experts des équipes de maintenance au sol pour qu'ils vérifient les capacités opérationnelles du moteur en fonction des alertes levées.

Le bon calibrage des algorithmes de suivi de l'état de santé est primordial pour lever des alertes pertinentes lorsque le moteur se dégrade et ne pas lever d'alerte lors d'une fausse détection d'anomalie par exemple.

On cherche en effet, d'une part, à immobiliser le moins possible les moteurs afin de rentabiliser leur exploitation, et, d'autre part, à anticiper judicieusement les opérations de maintenance afin d'éviter des réparations couteuses. Par exemple il peut être intéressant de changer une certaine pièce dès qu'un taux d'endommagement est atteint afin de limiter sur les autres pièces en liaison avec la pièce endommagée, l'impact de cette dégradation. Selon un autre exemple, lorsque des alertes sont levées de manière indue, ceci peut amener par mesure de sécurité à l'immobilisation du moteur qui après vérification par les experts s'avérera apte au vol.

Or actuellement, le calibrage des algorithmes de suivi de l'état de santé est réalisé de manière imparfaite par manque de données concernant d'éventuelles dégradations puisque les moteurs sont réparés avant qu'un endommagement puisse se produire. En l'absence de données de supervision, il faut en effet utiliser des algorithmes de détection d'anomalies qui n'exploitent que les cas normaux et qui sont peu adaptés pour identifier des types de dégradation. Pour réaliser cette identification, il faut utiliser des modèles de signatures construites par simulation à partir de l'expertise des ingénieurs aéronautiques mais non nécessairement observées.

Par ailleurs, les dispositifs de détection et de surveillance produisent beaucoup d'indicateurs divers qui peuvent être corrélés entre eux. Les experts peuvent avoir du mal à prendre une décision quant à la pertinence des alertes en observant les indicateurs. Il leur faut donc passer du temps sur chaque cas spécifique d'anomalie alors que le nombre important de moteurs suivis les contraint à prendre des décisions dans des temps de plus en plus limités.

### EXPOSÉ DE L'INVENTION

L'invention a pour objectif de proposer une solution d'aide à la décision la plus automatique possible, accélérant ainsi le travail des experts tout en augmentant le taux de détection d'anomalie sans augmenter le taux de fausses alarmes.

L'invention propose pour cela un système tel que défini par la revendication 1 et un procédé tel que défini par la revendication 10.

Certains aspects préférés mais non limitatifs du système selon l'invention sont définis par les revendications dépendantes 2 à 9.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
- la figure 1 illustre de manière schématique un système d'aide à la décision pour la maintenance d'une machine selon un mode de réalisation possible de l'invention ;
- la figure 2 illustre de manière schématique un procédé d'aide à la décision pour la maintenance d'une machine selon un mode de réalisation possible de l'invention.

### EXPOSÉ DÉTAILLÉ DE MODES DE RÉALISATION PARTICULIERS

L'invention propose d'une manière générale un outil à même de fournir de manière automatisée des informations utiles pour une prise de décision relative à des opérations de maintenance d'une machine. L'invention trouve avantageusement application à la maintenance d'un moteur d'aéronef, sans que cela soit pour autant limitatif.

Dans ce cadre, l'invention propose un système d'aide à la décision pour la maintenance d'une machine qui calcule de manière automatique un diagnostic de fonctionnement de la machine. Par diagnostic de fonctionnement, on entend une indication quant à la présence ou non d'un fonctionnement particulier (tel qu'une anomalie), potentiellement accompagnée d'une probabilité d'occurrence du fonctionnement particulier.

Le principe de l'invention est de mettre en corrélation les diagnostics de fonctionnement issus des calculs automatiques avec des diagnostics réalisés par des experts. Les calculs automatiques sont réalisés au moyen d'un modèle de décision capable d'apprentissage, et cet apprentissage est exécuté itérativement de manière à minimiser l'erreur de diagnostic entre la réponse du système et les réponses des experts.

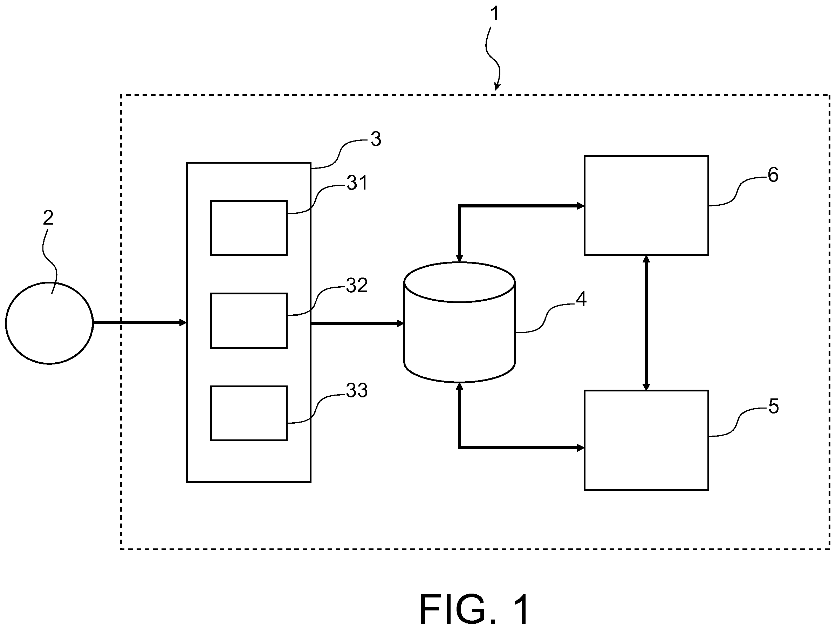

En référence à la figure 1, l'invention concerne plus particulièrement un système d'aide à la décision 1 pour la maintenance d'une machine, telle qu'un moteur d'aéronef 2.

Le système 1 comprend une unité 3 de détection d'anomalies qui comporte divers modules de détection d'anomalies 31, 32, 33. Ces modules reçoivent des mesures de paramètres physiques relatifs à différents composants de la machine, et sont configurés pour déterminer des indicateurs de santé à partir de ces mesures. Ces indicateurs de santé sont fournis à une base de données 4.

Les indicateurs de santé produits par les modules 31, 32, 33 sont des résultats de calculs, généralement des sorties d'algorithmes, ou des résultats de tests statistiques. Il s'agit par exemple de sorties d'algorithmes de suivi de l'état de santé ou des synthèses ou résultats d'analyses d'essais.

Typiquement, pour la surveillance des flottes de moteurs d'avions, les mesures réalisées au cours de chaque vol sont analysées par un gestionnaire de flotte. Ces analyses sont réalisées par les modules de détection d'anomalies 31, 32, 33 qui implémentent des algorithmes de détection de rupture dans le comportement du moteur de vol à vol. Il y a plusieurs sortes de ruptures (franche ou progressive), plusieurs façons de les observer (long ou court terme), et une centaine de signaux à regarder séparément ou en relation. On dispose donc d'une panoplie de modules de détection d'anomalie (plusieurs milliers) qui fournissent tous, après chaque vol, leurs indicateurs de santé.

Le système 1 comprend par ailleurs un calculateur 5 configuré pour calculer un diagnostic de fonctionnement à partir d'indicateurs de santé fournis par les modules de détection d'anomalies 31, 32, 33. Ce calcul est réalisé en venant appliquer un modèle de décision qui comprend un ensemble de règles permettant de fusionner les indicateurs de santé et de synthétiser les informations fusionnées pour fournir un diagnostic de fonctionnement.

A titre d'exemple, le calculateur 5 peut prendre en entrée les 10 derniers résultats de tous les modules de détection d'anomalies 31, 32, 33. Il produit en sortie une unique information, par exemple une information indicative d'une absence de rupture ou une information indicative d'une rupture de type donné (performance, compresseur, turbine, vibration, etc.), sur un signal ou plusieurs signaux mesurés en utilisant les détections successives pour confirmer l'information ainsi produite.

Dans le cadre de l'invention, le modèle de décision est capable d'apprentissage supervisé, c'est-à-dire qu'il peut élaborer automatiquement ses règles à partir d'une base de données d'apprentissage contenant des indicateurs de santé et des diagnostics de fonctionnement validés, ici la base de données 4.

Cet apprentissage peut être réalisé par différentes méthodes. Il peut par exemple exploiter un algorithme de classification de type Bayésien naïf, ou de type des forêts d'arbres décisionnels ("random forest"). Il peut également reposer sur des méthodes de régressions (tels que réseaux de neurones), ou encore exploiter un raisonneur utilisant de la logique floue.

Le modèle de décision peut ainsi être une classification naïve bayésienne ou une classification résultant de l'application d'un algorithme des forêts d'arbres décisionnels. L'algorithme de type Bayésien naïf donne des résultats facilement appréhendables par les experts, et est de préférence utilisé à l'initialisation du processus. Il est en effet plus didactique pour les experts, ce qui leur permet d'avoir une bonne confiance en l'invention. Ensuite, une fois la phase d'initialisation complétée, un algorithme de type « random forest » peut être exploité : il donne de meilleurs résultats mais ces derniers sont plus difficile à interpréter.

L'invention propose de corriger itérativement ce modèle de manière à améliorer la qualité de l'information de diagnostic de fonctionnement. Un réapprentissage du modèle de décision est pour cela réalisé qui consiste à reconsidérer les règles de décision élaborées lors de l'apprentissage et à les réapprendre afin de fournir un diagnostic de fonctionnement plus fiable. A l'issue de chaque réapprentissage, un nouveau modèle de décision est généré. En d'autres termes, le modèle de décision est modifié à chaque itération d'un réapprentissage.

Afin d'initier l'apprentissage du modèle de décision, des sous-ensembles d'indicateurs de santé disponibles peuvent être choisis au hasard (dont la taille et le type dépendent de la précision recherchée, ainsi que des ensembles d'indicateurs de santé pour lesquels on dispose déjà d'un diagnostic de fonctionnement validé). Un expert analyse chaque sous-ensemble de données et détermine si il y a ou non une anomalie et de quel type (labellisation). A son diagnostic d'expert, il peut adjoindre un niveau de qualité ou niveau de confiance. Ce diagnostic et ce niveau de qualité sont ensuite liés aux sous-ensembles de données dans la base de données 4.

Toujours en référence à la figure 1, le système d'aide à la décision 1 comprend une interface homme-machine 6 configurée de manière à permettre à au moins un expert de consulter les indicateurs de santé stockés dans la base de données 4 et de déclarer un diagnostic d'expert. Les experts peuvent ainsi observer les signaux qui les intéressent (en fonction de leur compétences par exemple) et fournir leur diagnostic d'expert (problème de performance, problème de compression, trop de vibrations, etc.).

Le calculateur 5 est par ailleurs configuré pour comparer un diagnostic de fonctionnement calculé à l'aide du modèle de décision à partir d'un ensemble d'indicateurs de santé avec au moins un diagnostic d'expert déclaré après consultation dudit ensemble d'indicateurs de santé. En cas de désaccord entre le diagnostic de fonctionnement calculé et l'au moins un diagnostic d'expert déclaré, le modèle de décision peut être modifié, c'est-à-dire qu'il subit un réapprentissage de manière à minimiser l'erreur de diagnostic.

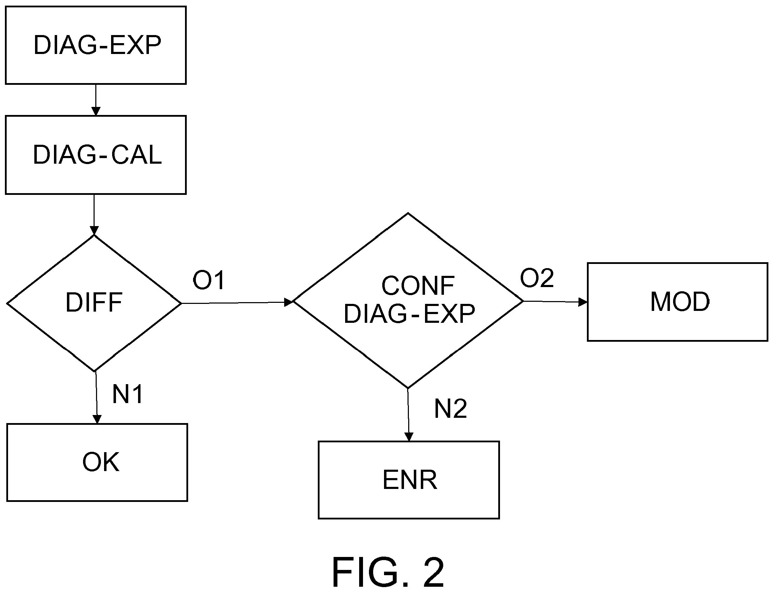

La figure 2 illustre de manière schématique un exemple d'enchaînement de différentes étapes pouvant conduire à la modification du modèle de décision dans un procédé conforme à une réalisation possible de l'invention.

Le procédé comprend une étape préalable de calibrage au cours de laquelle un ou plusieurs experts étudient les indicateurs de santé initialement stockés dans la base de données 4 pour fournir leurs diagnostics d'expert et permettre l'initialisation de l'apprentissage du modèle de décision.

Puis au cours d'une étape « DIAG-EXP », chaque expert d'un panel d'experts, via l'interface homme-machine 6, consultent et expertisent un ensemble d'indicateurs de santé stockés dans la base de données 4 et déclare en retour son diagnostic d'expert (contenant sa classification du fonctionnement observé et le niveau de confiance associé).

Au cours d'une étape « DIAG-CAL », le calculateur 5 calcule un diagnostic de fonctionnement à partir dudit ensemble d'indicateurs de santé au moyen du modèle de décision préalablement appris. Au cours d'une étape « DIFF », le diagnostic de fonctionnement calculé automatiquement par le calculateur est comparé aux diagnostics d'expert. En cas d'accord (« N1 »), un niveau d'expertise du système, en particulier un niveau d'expertise pour détecter un fonctionnement donné, peut être renforcé.

En cas de désaccord (« O1 »), il est demandé aux experts au cours d'une étape « CONF DIAG-EXP » de confirmer leur jugement tout en modifiant éventuellement le niveau de confiance qu'ils accordent à leur jugement. Pour juger d'un désaccord, les niveaux d'expertise des experts pour identifier le fonctionnement objet du diagnostic peuvent être pris en compte, par exemple via une pondération de l'importance du diagnostic de chaque expert.

Dans l'affirmative (« O2 »), c'est-à-dire si au moins un cas de désaccord est confirmé, par exemple si plusieurs cas de désaccords sont confirmés qui permettent d'atteindre un niveau de confiance suffisant dans le jugement du désaccord, il est procédé au cours d'une étape « MOD » à la modification du modèle d'apprentissage. Cette modification est un réapprentissage des règles du modèle exploitant le contenu de la base de données dans lequel ledit ensemble d'indicateurs de santé est désormais associé aux diagnostics d'expert confirmés.

Dans la négative (« N1 »), c'est-à-dire si les experts acceptent la proposition du système (ils considèrent que le diagnostic de fonctionnement est correct et infirment, au moins pour certains, leur jugement initial), il est procédé au cours d'une étape « ENR » à l'enregistrement de ce diagnostic dans la base de données 4 où il est associé audit ensemble d'indicateurs de santé.

Afin de réaliser cette confirmation / infirmation de leur jugement initial, chaque expert du panel peut, via l'interface homme-machine, consulter le diagnostic d'expert déclaré par chacun du ou des autres experts du panel ainsi que le diagnostic de fonctionnement calculé.

Chaque expert peut présenter un niveau d'expertise, et le calculateur 5 peut être configuré, lors de la modification du modèle de décision, pour pondérer l'importance d'un diagnostic d'expert confirmé en fonction du niveau d'expertise de l'expert.

Un expert pouvant disposer de plusieurs compétences, le niveau d'expertise d'un expert peut être décliné en un ensemble de niveaux d'expertise, chacun relatif à la détection d'un fonctionnement donnée. Lorsqu'un expert consulte les diagnostics des autres experts et celui calculé par le système, les niveaux d'expertise des experts et du système peuvent lui être fournis.

Les experts peuvent procéder à une déclaration initiale de leurs compétences, c'est-à-dire de leurs capacités à détecter un fonctionnement (une anomalie par exemple) donné. Quand un diagnostic d'expert est évalué par le panel d'experts, il peut être étiqueté comme relatif à une ou plusieurs compétences. Il est ainsi possible, pour un expert donné, de comptabiliser les diagnostics d'expert positifs (validés par le panel) pour la détection d'un fonctionnement donné, et ainsi de mesurer un taux de succès représentatif du niveau d'expertise pour la détection dudit fonctionnement.

De la même manière, le système devient lui aussi un expert au fil du temps et il est donc possible d'évaluer ses compétences et donc de suivre son degré de maturité. A titre d'exemple, le système calcule un diagnostic de fonctionnement pour un fonctionnement donné A. Pour atteindre cette conclusion, son modèle de décision a utilisé des expériences passées lui permettant d'identifier ce fonctionnement. Il avait donc déjà des réponses d'experts ayant une compétence pour de fonctionnement A et il avait donc lui-même acquis un niveau d'expertise pour ce fonctionnement A. Ce niveau d'expertise peut servir d'indication de pertinence de la réponse du système. Cette pertinence est encore plus élevée si le système a un bon niveau d'expertise pour la détection d'autres fonctionnements. Par exemple, il possède un bon niveau d'expertise pour un fonctionnement B, et il juge que le fonctionnement n'est pas de type B.

Et comme décrit précédemment, si le diagnostic de fonctionnement pour le fonctionnement donné A est confirmé par les experts, alors le niveau d'expertise du système pour la détection de ce fonctionnement A est renforcé.

L'invention s'étend non seulement au système 1 d'aide à la décision, mais également au procédé d'aide à la décision pour la maintenance d'un moteur mis en œuvre par un tel système. Il concerne également un produit programme d'ordinateur comprenant des instructions de code pour l'exécution des étapes du procédé selon l'invention, lorsque ledit programme est exécuté sur un ordinateur.

En prenant directement en compte l'avis des experts, l'invention permet de pallier au manque de supervision des systèmes existants en créant une base de connaissance pérenne.

Les experts tirent également bénéfice de l'invention grâce à l'étude statistique que l'on peut faire de leurs historiques de renseignement respectifs. Ce qui les implique positivement dans le processus. L'invention utilise ces mêmes renseignements pour se calibrer et en profite pour évaluer les compétences de chaque groupe d'experts.

L'invention permet de calibrer beaucoup plus finement les algorithmes permettant l'apprentissage du modèle de décision. Le diagnostic automatisé est alors de meilleure qualité, ce qui permet d'anticiper la dégradation des pièces en les changeant rapidement dès qu'un diagnostic traduit une dégradation de la pièce. En effet, plus la dégradation d'une pièce est identifiée tôt, moins il y a de risques que cette pièce n'endommage les autres pièces du moteur avec lesquelles elle est en interaction. Ainsi, l'invention permet d'améliorer l'efficacité des réparations et le coût de ces dernières en limitant, d'une part, le nombre de pièces à changer, et, d'autre part, en limitant le nombre d'inspection à réaliser par les experts suite à la réception d'une alerte.

## Revendications

1. Système d'aide à la décision (1) pour la maintenance d'une machine (2), ledit système comprenant des modules de détection d'anomalies (31, 32, 33) configurés pour déterminer des indicateurs de santé à partir de mesures de paramètres physiques de la machine, un calculateur (5) configuré pour calculer un diagnostic de fonctionnement en appliquant un modèle de décision capable d'apprentissage à partir d'un ensemble d'indicateurs de santé déterminés par les modules de détection d'anomalies, et une interface homme-machine (6) configurée de manière à permettre à au moins un expert de consulter les indicateurs de santé et de déclarer un diagnostic d'expert,
**caractérisé en ce que** le calculateur (5) est en outre configuré pour comparer (DIFF) le diagnostic de fonctionnement calculé à partir dudit ensemble d'indicateurs de santé avec au moins un diagnostic d'expert déclaré après consultation dudit ensemble d'indicateurs de santé, et pour modifier (MOD) le modèle de décision en cas de désaccord entre le diagnostic de fonctionnement calculé et l'au moins un diagnostic d'expert déclaré.

2. Système selon la revendication 1, dans lequel le calculateur (5) est configuré pour modifier le modèle de décision après déclaration, via l'interface homme-machine (6), d'une confirmation de l'au moins un diagnostic d'expert déclaré.

3. Système selon la revendication 2, dans lequel le calculateur (5) est configuré pour ne pas modifier le modèle de décision après déclaration, via l'interface homme-machine, d'une infirmation de l'au moins un diagnostic d'expert déclaré.

4. Système selon l'une des revendications 1 à 3, dans lequel le calculateur (5) est configuré pour comparer le diagnostic de fonctionnement calculé à partir dudit ensemble d'indicateurs de santé avec une pluralité de diagnostics d'expert chacun déclaré après consultation dudit ensemble d'indicateurs de santé par un expert appartenant à un panel d'experts, et dans lequel l'interface homme-machine (6) est en outre configurée de manière à permettre à chaque expert du panel de consulter le diagnostic d'expert déclaré par chacun du ou des autres experts du panel et le diagnostic de fonctionnement calculé.

5. Système selon l'une des revendications 1 à 4, dans lequel le calculateur (5) est en outre configuré, lors de la modification du modèle de décision, pour pondérer l'importance de l'au moins un diagnostic d'expert déclaré par un expert par un niveau d'expertise de l'expert.

6. Système selon la revendication 5, dans lequel le niveau d'expertise est associé à un fonctionnement donné.

7. Système selon l'une des revendications 1 à 6, dans lequel le calculateur est configuré pour renforcer un niveau d'expertise du système en cas d'accord entre le diagnostic de fonctionnement calculé et l'au moins un diagnostic d'expert déclaré.

8. Système selon l'une des revendications 1 à 7, comprenant une base de données (4) pour le stockage des indicateurs de santé et des diagnostics d'expert déclarés.

9. Système selon l'une des revendications 1 à 8, dans lequel le modèle de décision est une classification naïve bayésienne ou une classification résultant de l'application d'un algorithme des forêts d'arbres décisionnels.

10. Procédé d'aide à la décision pour la maintenance d'une machine, comprenant la détermination d'indicateurs de santé à partir de mesures de paramètres physiques de la machine, le calcul (DIAG-CAL) d'un diagnostic de fonctionnement à partir d'un ensemble d'indicateurs de santé déterminés en appliquant un modèle de décision capable d'apprentissage, la consultation dudit ensemble d'indicateurs de santé par au moins un expert et la déclaration d'un diagnostic d'expert (DIAG-EXP) par l'au moins un expert,
**caractérisé en ce qu'**il comprend les étapes de comparaison (COMP) du diagnostic de fonctionnement calculé à partir dudit ensemble d'indicateurs de santé avec au moins un diagnostic d'expert déclaré après consultation dudit ensemble d'indicateurs de santé, et de modification (MOD) du modèle de décision en cas de désaccord entre le diagnostic de fonctionnement calculé et l'au moins un diagnostic d'expert déclaré.

11. Produit programme d'ordinateur comprenant des instructions de code pour l'exécution des étapes de comparaison et de modification du procédé selon la revendication 10, lorsque ledit programme est exécuté sur un ordinateur.

## Patentansprüche

1. Entscheidungshilfesystem (1) zur Instandhaltung einer Maschine (2), wobei das System Fehlererkennungsmodule (31, 32, 33), die dazu konfiguriert sind, Zustandsindikatoren aufgrund von Messungen physikalischer Parameter der Maschine zu bestimmen, einen Rechner (5), der dazu konfiguriert ist, eine Funktionsdiagnose zu berechnen, indem er ein lernfähiges Entscheidungsmodell aufgrund einer Gesamtheit von durch die Fehlererkennungsmodule bestimmten Zustandsindikatoren anwendet, sowie eine Mensch-Maschine-Schnittstelle (6) aufweist, die derart konfiguriert ist, dass sie mindestens einem Experten ermöglicht, die Zustandsindikatoren abzufragen und eine Expertendiagnose abzugeben,
**dadurch gekennzeichnet, dass** der Rechner (5) weiterhin dazu konfiguriert ist, die aufgrund der Gesamtheit von Zustandsindikatoren berechnete Funktionsdiagnose mit mindestens einer Expertendiagnose zu vergleichen (DIFF), die nach Abfrage der gesamten Zustandsindikatoren abgegeben wird, sowie das Entscheidungsmodell im Falle einer Diskrepanz zwischen der berechneten Funktionsdiagnose und der mindestens einen abgegebenen Expertendiagnose abzuändern (MOD).

2. System nach Anspruch 1, wobei der Rechner (5) dazu konfiguriert ist, das Entscheidungsmodell nach Abgabe, über die Mensch-Maschine-Schnittstelle (6), einer Bekräftigung der mindestens einen abgegebenen Expertendiagnose abzuändern.

3. System nach Anspruch 2, wobei der Rechner (5) dazu konfiguriert ist, das Entscheidungsmodell nach Abgabe, über die Mensch-Maschine-Schnittstelle, einer Entkräftung der mindestens einen abgegebenen Expertendiagnose nicht abzuändern.

4. System nach einem der Ansprüche 1 bis 3, wobei der Rechner (5) dazu konfiguriert ist, die aufgrund der Gesamtheit der Zustandsindikatoren berechnete Funktionsdiagnose mit mehreren Expertendiagnosen zu vergleichen, die jeweils nach Abfrage der Gesamtheit der Zustandsindikatoren durch einen einer Expertengruppe angehörenden Experten abgegeben werden, und wobei die Mensch-Maschine-Schnittstelle (6) weiterhin derart konfiguriert ist, dass sie jedem Experten der Gruppe ermöglicht, die Expertendiagnose, die von jedem des oder der anderen Experten der Gruppe abgegeben wird, und die berechnete Funktionsdiagnose abzufragen.

5. System nach einem der Ansprüche 1 bis 4, wobei der Rechner (5) weiterhin bei der Abänderung des Entscheidungsmodells dazu konfiguriert ist, die Bedeutung der mindestens einen Expertendiagnose zu gewichten, die von einem Experten durch ein hohes Maß an Fachwissen des Experten abgegeben wird.

6. System nach Anspruch 5, wobei das hohe Maß an Fachwissen mit einer bestimmten Funktion verbunden ist.

7. System nach einem der Ansprüche 1 bis 6, wobei der Rechner dazu konfiguriert ist, ein hohes Maß an Fachwissen des Systems im Falle einer Übereinstimmung zwischen der berechneten Funktionsdiagnose und der mindestens einen abgegebenen Expertendiagnose zu erhöhen.

8. System nach einem der Ansprüche 1 bis 7, mit einer Datenbank (4) für die Speicherung der Zustandsindikatoren und der abgegebenen Expertendiagnosen.

9. System nach einem der Ansprüche 1 bis 8, wobei das Entscheidungsmodell eine naive Bayes'sche Klassifizierung oder eine Klassifizierung ist, die sich aus der Anwendung eines Entscheidungsbaum-Algorithmus ergibt.

10. Entscheidungshilfeverfahren zur Instandhaltung einer Maschine, mit der Bestimmung von Zustandsindikatoren aufgrund von Messungen physikalischer Parameter der Maschine, der Berechnung (DIAG-CAL) einer Funktionsdiagnose aufgrund einer Gesamtheit von Zustandsindikatoren, die bestimmt werden, indem ein lernfähiges Entscheidungsmodell angewandt wird, der Abfrage der Gesamtheit von Zustandsindikatoren durch mindestens einen Experten sowie der Abgabe einer Expertendiagnose (DIAG-EXP) durch mindestens einen Experten,
**dadurch gekennzeichnet, dass** es die Schritte des Vergleichs (COMP) der aufgrund der Gesamtheit von Zustandsindikatoren berechneten Funktionsdiagnose mit mindestens einer nach Abfrage der Gesamtheit von Zustandsindikatoren abgegebenen Expertendiagnose, sowie der Abänderung (MOD) des Entscheidungsmodells im Falle von Diskrepanz zwischen der berechneten Funktionsdiagnose und der mindestens einen abgegebenen Expertendiagnose aufweist.

11. Computerprogrammprodukt mit Codeanweisungen zur Durchführung der Schritte des Vergleichs und der Abänderung des Verfahrens nach Anspruch 10, wenn das Programm auf einem Computer ausgeführt wird.

## Claims

1. Decision aid system (1) for the maintenance of a machine (2), said system comprising anomaly detection modules (31, 32, 33) configured to determine health indicators on the basis of measurements of physical parameters of the machine, a calculator (5) configured to calculate an operating diagnosis by applying a decision model capable of learning on the basis of a set of health indicators determined by the anomaly detection modules, and a man-machine interface (6) configured in such a way as to allow at least one expert to consult the health indicators and to declare an expert diagnosis,
**characterized in that** the calculator (5) is furthermore configured to compare (DIFF) the operational diagnosis calculated on the basis of said set of health indicators with at least one expert diagnosis declared after consultation of said set of health indicators, and to modify (MOD) the decision model in the event of disagreement between the computed operational diagnosis and the at least one declared expert diagnosis.

2. System according to claim 1, in which the calculator (5) is configured to modify the decision model after declaration of confirmation of the at least one declared expert diagnostic, through the man-machine interface (6).

3. System according to claim 2, in which the calculator (5) is configured to not modify the decision model after declaration of invalidation of the at least one declared expert diagnostic, through the man-machine interface.

4. System according to one of claims 1 to 3, in which the calculator (5) is configured to compare the operating diagnosis computed from said set of health indicators with a plurality of expert diagnoses each declared after an expert belonging to a panel of experts has viewed said set of health indicators, and in which the man-machine interface (6) is also configured such that each expert in the panel can view the expert diagnosis declared by each or some of the other experts in the panel and the computed anomaly diagnostic.

5. System according to one of claims 1 to 4, in which the calculator (5) is also configured, when the decision model is modified, to weight the importance of the at least one expert diagnosis declared by an expert, by an expertise level of the expert.

6. System according to claim 5, in which the level of expertise is associated with a given type of operation.

7. System according to one of claims 1 to 6, in which the calculator is configured to reinforce an expertise level of the system in case of agreement between the computed operating diagnosis and the at least one declared expert diagnosis.

8. System according to one of claims 1 to 7, comprising a database (4) for the storage of health indicators and declared expert diagnoses.

9. System according to one of claims 1 to 8, in which the decision model is a naive Bayes classification or a classification derived from the application of a decisional random forest algorithm.

10. Decision aid method for maintenance of a machine, comprising the determination of health indicators on the basis of measurements of physical parameters of the machine, the calculation (DIAG-CAL) of an operating diagnosis by applying a decision model capable of learning on the basis of a set of determined health indicators, the consultation of said set of health indicators by at least one expert and the declaration of an expert diagnosis (DIAG-EXP) by the at least one expert,
**characterized in that** it comprises steps to compare (COMP) the operational diagnosis calculated on the basis of said set of health indicators with at least one expert diagnosis declared after consultation of said set of health indicators, and to modify (MOD) the decision model in the event of disagreement between the computed operational diagnosis and the at least one declared expert diagnosis.

11. Computer program containing code instructions for execution of the comparison and modification steps in the method according to claim 10 when said program is executed on a computer.
